# EUROPÄISCHE PATENTSCHRIFT

(11) **EP 3 756 926 B1**
(45) Veröffentlichungstag und Bekanntmachung des Hinweises auf die Patenterteilung: **03.07.2024**
(21) Anmeldenummer: 20164568.6
(22) Anmeldetag: 20.03.2020
(51) Int. Cl.: B60K 37/00, B60K 35/00

(54) **KOMBIINSTRUMENT EINES KRAFTFAHRZEUGS**
COMBINED TOOL OF A MOTOR VEHICLE
INSTRUMENT COMBINÉ D'UN VÉHICULE AUTOMOBILE

(30) Priorität: 25.06.2019 DE 102019117034
(43) Veröffentlichungstag der Anmeldung: 30.12.2020
(73) Patentinhaber: Marelli Stuttgart (Germany) GmbH, 70563 Stuttgart (DE)
(72) Erfinder: PEIL, Alexander, 70563 Stuttgart (DE); GAMMOUNE, Mohamed, 70563 Stuttgart (DE); KUBOWSKI, Harald, 70563 Stuttgart (DE)
(74) Vertreter: Herrmann, Jochen

(56) Entgegenhaltungen:
- DE-A1-102016 100 972
- DE-A1-102016 123 045
- DE-A1-102016 216 405

## Beschreibung

Die vorliegende Erfindung betrifft ein Kombiinstrument eines Kraftfahrzeugs. Das Kombiinstrument ist zur Montage im Inneren des Kraftfahrzeugs im Sichtbereich des Fahrers im Armaturenbrett vorgesehen. Es umfasst mindestens ein analoges Zeigerinstrument zur Anzeige von betriebsbezogenen Informationen betreffend das Kraftfahrzeug. Das mindestens eine Zeigerinstrument umfasst mindestens einen Zeiger und mindestens eine dem oder jedem Zeiger zugeordnete Skala mit Skalierungsstrichen und Zahlen.

Derartige Kombiinstrumente mit einem oder mehreren analogen Zeigerinstrumenten sind in unterschiedlichen Ausführungsformen aus dem Stand der Technik bekannt. So zeigt bspw. die DE 10 2011 082 272 A1 ein entsprechendes Kombiinstrument mit analogen Zeigerinstrumenten, die jeweils mindestens einen durch einen Elektromotor angetriebenen Zeiger aufweisen. Während früher hauptsächlich analoge Zeigerinstrumente Verwendung fanden, die mindestens einen durch einen Elektromotor angetriebenen Zeiger umfassen, werden in neuerer Zeit, insbesondere im hochpreisigen Fahrzeugsegment, zunehmend digitale Anzeigeeinrichtungen eingesetzt, die mindestens einen Bildschirm aufweisen, auf dem ein Bild eines analogen Zeigerinstruments und/oder eine digitale Anzeige dargestellt werden kann. Der Vorteil der digitalen Anzeigeeinrichtungen besteht in der hohen Flexibilität der dargestellten Informationen bezüglich Design und Inhalt. Aufgrund der relativ hohen Kosten bleiben die digitalen Anzeigevorrichtungen derzeit noch hauptsächlich dem hochpreisigen Fahrzeugsegment vorbehalten. In dem niederpreisigen Fahrzeugsegment werden nach wie vor und voraussichtlich auch in Zukunft Kombiinstrumente eingesetzt, die mindestens ein analoges Zeigerinstrument aufweisen. Das niederpreisige Fahrzeugsegment umfasst einerseits bestimmte Fahrzeugkategorien (insbesondere Kleinst- und Kleinwagen) aber auch Fahrzeuge beliebiger Fahrzeugkategorien, die für den Massenmarkt in bestimmten Ländern bestimmt sind, wo bspw. die gesetzlichen Anforderungen oder die Wünsche der Käufer nicht so hoch sind, wie in den großen Industriestaaten.

Bei analogen Zeigerinstrumenten ist es in der Regel so, dass ein Elektromotor, bspw. ein Schrittmotor, über eine Welle einen Zeiger in eine Drehbewegung versetzt und in eine bestimmte Drehposition bewegt, welche dem aktuellen Wert einer darzustellenden Information entspricht. Damit der Fahrer des Kraftfahrzeugs die aktuelle Drehposition des Zeigers einem bestimmten Wert der darzustellenden Information zuordnen kann, ist auf einer im Sichtfeld des Fahrers des Kraftfahrzeugs angeordneten Anzeigefläche des Zeigerinstruments eine Skala mit Skalierungsstrichen und Zahlen fest aufgebracht. Die Skalierungsstriche und die Zahlen der Skala des Zeigerinstruments können mittels eines Gravur-, Ätz-, Präge- oder Druckverfahrens, aber auch mittels eines Lasermarkierungsverfahrens durch Gravieren, Aufschäumen, Abtragen oder Verfärben, fest aufgebracht sein. Alternativ ist es auch denkbar, dass die Skalierungsstriche und die Zahlen der Skala des Zeigerinstruments aus der Anzeigefläche des Zeigerinstruments herausgestanzt sind, wobei in die ausgestanzten Bereiche transparente Elemente eingesetzt werden, so dass die Skalierungsstriche und die Zahlen hinterleuchtet werden können. Die im Stand der Technik fest aufgebrachten Skalierungsstriche und Zahlen der Skala haben insbesondere folgende Nachteile:
- Hoher Fertigungsaufwand: So müssen aufgrund gesetzlicher Vorgaben für unterschiedliche Maßeinheiten, bspw. unterschiedliche Geschwindigkeitsmaßeinheiten (km/h oder mph) oder unterschiedliche Volumenmaßeinheiten (Gallonen oder Liter) oder unterschiedliche Temperaturmaßeinheiten (°C oder °F) oder unterschiedliche Maßeinheiten für den Kraftstoffverbrauch (l/100 km oder km/I), entweder die Anzeigeflächen der Zeigerinstrumente für die Länder, in denen unterschiedliche Maßeinheiten verwendet werden, jeweils mit unterschiedlichen Skalierungsstrichen und Zahlen versehen und vorgehalten werden, oder aber es müssen mehrere Skalen mit unterschiedlichen Skalierungsstrichen und Zahlen auf die Anzeigeflächen aufgebracht werden, wodurch die Skalen sehr unübersichtlich geraten können.
- Hoher Fertigungsaufwand: Das feste Aufbringen der Skalierungsstriche und Zahlen der Skalen auf die Anzeigeflächen der Zeigerinstrumente und die Realisierung einer Hinterleuchtung der Skalierungsstriche und Zahlen der Skalen ist sehr aufwendig. Für verschiedene Fahrzeugtypen mit unterschiedlichem Design von ansonsten gleichen Kombiinstrumenten müssen die Anzeigeflächen unterschiedlich beschriftet und vorgehalten werden.
- Wenig Flexibilität (inhaltlich): Eine flexible Anpassung der Skalierungsstriche und/oder Zahlen gemäß den Wünschen des Nutzers ist nicht möglich. So kann ein Nutzer bspw. bei der Anzeige der Motordrehzahl nicht zwischen den Zahlen "1000, 2000, 3000, 4000, ..." und den Zahlen "1, 2, 3, 4, ..." (jeweils "x 1000) wählen oder gezielt eine in dem Land, in dem sich das Fahrzeug aktuell befindet, nicht standardmäßig benutzte Maßeinheit einstellen.
- Wenig Flexibilität (designtechnisch): Eine flexible Anpassung der Schriftart und/oder Farbe der Skalierungsstriche und/oder Zahlen gemäß den Wünschen des Nutzers ist nicht möglich.
- Viel Bauraum erforderlich, insbesondere bei einer Hinterleuchtung der Skalierungsstriche und/oder der Zahlen der Skala: Aus der Anzeigefläche des Zeigerinstruments müssen die Skalierungsstriche und/oder Zahlen herausgestanzt und transparente Elemente eingesetzt werden, und auf die Rückseite der Anzeigefläche muss mindestens eine Lichtquelle zum Hinterleuchten der Skalierungsstriche und/oder Zahlen angeordnet werden.

Diese Nachteile könnten zwar theoretisch durch volldigitale Anzeigeeinrichtungen mit einem oder mehreren Bildschirmen überwunden werden, auf denen Skalierungsstriche und/oder Zahlen frei wählbar angezeigt werden können. Die digitalen Anzeigeeinrichtungen sind jedoch noch sehr teuer und können deshalb - zumindest derzeit - im niederpreisigen Fahrzeugsegment nicht eingesetzt werden.

Das Dokument DE 10 2016 100972 A1 offenbart den Oberbegriff des Gegenstandes des Anspruchs 1. H

Ausgehend von dem beschriebenen Stand der Technik liegt der vorliegenden Erfindung deshalb die Aufgabe zugrunde, ein Kombiinstrument mit herkömmlichen analogen Zeigerinstrumente der eingangs genannten Art dahingehend auszugestalten und weiterzubilden, dass zumindest die Zahlen der Skalen, nach Möglichkeit auch die Skalierungsstriche der Skalen, kostengünstig und flexibel in den Zeigerinstrumenten angezeigt werden können.

Zur Lösung dieser Aufgabe wird ausgehend von dem bekannten Kombiinstrument, der Gegenstand des Anspruchs 1 vorgeschlagen.

Unter Umständen können noch zusätzliche Angaben bezüglich der dargestellten Skala, wie bspw. die dargestellte Maßeinheit der dargestellten Zahlenwerte (z.B. "km/h" oder "miles/h" bei einer Geschwindigkeitsanzeige; "U/min" oder"rpm" bei einer Motordrehzahlanzeige; "liters" oder "gallons" bei einer Tankinhaltsanzeige; "l/100 km" oder "km/l" bei einer Kraftstoffverbrauchsanzeige) oder ein Multiplikationsfaktor für die dargestellten Zahlenwerte (z.B. "x 1.000" bei einer Drehzahlanzeige) auf dem OLED-Display dargestellt werden. Der Zeiger des mit dem mindestens einen OLED-Display versehenen analogen Zeigerinstruments ist jedoch in jedem Fall analog ausgebildet und durch einen Elektromotor oder einen anderen geeigneten Antrieb angetrieben, und wird nicht auf dem OLED-Display als virtueller Zeiger dargestellt.

OLED ist die Abkürzung für "organic light-emitting diode". OLEDs sind flächige selbstleuchtende Halbleiterbauteile. OLEDs haben eine einfache und flache Struktur mit einem oder mehreren organischen Filmen zwischen zwei Elektroden. Die typische Dicke der organischen Filme beträgt etwa 100 bis 200 nm. Dabei werden in der Regel zwei Arten organischer Materialien eingesetzt: langkettige Polymere oder kleine Moleküle. Beim Anlegen einer Spannung von bspw. zwischen 3 und 12 V werden Elektronen aus der Kathode in den organischen Film injiziert. Gleichzeitig werden Löcher (positive Ladungen) von einer transparenten Anode mit hoher Austrittsarbeit in das organische Material injiziert. Im elektrischen Feld wandern positive und negative Ladungen durch den organischen Film. Bei ihrer Rekombination bilden sie angeregte Zustände. Zerfallen diese, werden Photonen ausgesendet und Licht tritt aus.

Die Lochleitungsschicht wird auf eine transparente Anode (z.B. ITO, Indium-Tin-Oxide = Indium-Zinn-Oxid) aufgebraucht, welche sich auf einer transparenten Schicht, bspw. einem Glas oder einer flexiblen Kunststofffolie, befindet. Darüber befindet eine zweite organische Schicht, in welche die Kathode Elektronen injiziert. Die Kathode besteht aus Metallen, wie bspw. Barium oder Kalzium. Die letzte Ebene ist wieder eine Schicht aus transparentem Material, z.B. Glas oder einer Folie. Eine als transparente Schicht dienende Folie ist bspw. aus Kunststoff gefertigt. Da das Kathodenmaterial mit Wasser oder Sauerstoff reagiert (korrodiert), muss die komplette Einheit abgedichtet werden.

Die Dicke eines OLED-Displays wird maßgeblich durch die Dicke der transparenten Schichten bestimmt und beträgt bei den hier vorzugsweise zum Einsatz kommenden OLED-Displays nur wenige Millimeter, vorzugsweise weniger als 1 mm. Zwei OLED-Techniken sind etabliert: Eine basiert auf kleinen Molekülen (small molecules), die in mehreren Schichten zwischen einer Anode und Kathode im Vakuum thermisch aufgedampft werden. Die andere ist vom Prinzip her ähnlich, der Aufbau jedoch einfacher. Hier sind nur zwei Schichten erforderlich, die aus verschiedenen langkettigen Polymeren bestehen. Die Polymere werden aus einer Lösung verarbeitet und entweder aufgedruckt oder über ein sogenanntes spin-coating-Verfahren aufgebracht.

Das erfindungsgemäße Kombiinstrument hat den Vorteil, dass die Zahlen der Skalen flexibel auf den Anzeigeflächen der Zeigerinstrumente dargestellt werden können. Dies ist selbst dann von Vorteil, wenn die Skalierungsstriche der Skalen nach wie vor auf herkömmliche Weise auf die Anzeigeflächen der Zeigerinstrumente fest aufgebracht sind. In diesem Fall erlaubt die Erfindung ein Umschalten der auf der Anzeigefläche eines Zeigerinstruments dargestellten Zahlen zwischen verschiedenen Maßeinheiten (z.B. Geschwindigkeitsmaßeinheiten (km/h oder mph), Volumenmaßeinheiten (Gallonen oder Liter), Temperaturmaßeinheiten (°C oder °F), Maßeinheiten für den Kraftstoffverbrauch (I/100 km oder km/I)). Zudem können die dargestellten Zahlen an die Wünsche des jeweiligen Nutzers des Kraftfahrzeugs individuell angepasst werden. Gleichzeitig wird der Aufbau kostengünstiger analoger Zeigerinstrumente beibehalten.

Das mindestens eine OLED-Display kann besonders einfach und kostengünstig einfach im Sichtbereich des Fahrers in dem Kombiinstrument angeordnet, vorzugsweise auf die Anzeigefläche eines analogen Zeigerinstruments oder ein anderes geeignetes Trägerelement im Inneren des Kombiinstruments aufgebracht und befestigt und elektrisch kontaktiert werden. Das OLED-Display kann als eine OLED-Folie ausgebildet sein, die auf die Anzeigefläche des Zeigerinstruments oder ein anderes Trägerelement des Kombiinstruments aufgeklebt werden kann. Dazu kann die Rückseite der OLED-Folie mit einer selbstklebenden Beschichtung versehen sein. Der für das mindestens eine OLED-Display erforderliche Bauraum ist aufgrund der geringen Tiefe des OLED-Displays minimal. Gegenüber herkömmlichen analogen Zeigerinstrumenten mit fest vorgegebenen hinterleuchteten Zahlen und Skalierungsstrichen bietet die vorgeschlagene Lösung mit mindestens einem OLED-Display sogar noch einen geringeren erforderlichen Bauraum, da auf zusätzliche Lichtquellen zum Hinterleuchten und auf transparente Elemente im Bereich der Zahlen und Skalierungsstriche verzichtet werden kann.

Gemäß einer vorteilhaften Weiterbildung der Erfindung wird vorgeschlagen, dass das mindestens eine Zeigerinstrument des Kombiinstruments ein einziges OLED-Display aufweist, das derart ausgebildet und in dem Kombiinstrument angeordnet ist, dass darauf alle Zahlen der mindestens einen Skala des mindestens einen Zeigerinstruments dargestellt werden können. Diese Weiterbildung führt zu einer weiteren Vereinfachung des Kombiinstruments, da alle Zahlen einer Skala auf einem einzigen OLED-Display dargestellt werden können. Dieses kann als Einheit einfach im Sichtbereich des Fahrers in dem Kombiinstrument angeordnet und auf einer vom Fahrer abgewandten Rückseite elektrisch kontaktiert werden. Es wird vorgeschlagen, dass das OLED-Display bogenförmig ausgebildet ist und um eine Drehachse des mindestens einen Zeigers des mindestens einen analogen Zeigerinstruments herum in dem Kombiinstrument angeordnet ist. Dabei kann das bogenförmige OLED-Display ellipsenförmige oder mehreckig ausgebildet sein. Der Abstand zwischen dem OLED-Display und der Drehachse des Zeigers muss nicht zwangsläufig immer äquidistant sein. Sinnvollerweise ist das OLED-Display in unmittelbarer Nähe zu den Skalierungsstrichen angeordnet, so dass eine problemlose Zuordnung der Zahlen zu den entsprechenden Skalierungsstrichen möglich ist. Bevorzugt ist das OLED-Display jedoch kreisbogenförmig ausgebildet und äquidistant um eine Drehachse des mindestens einen Zeigers des mindestens einen Zeigerinstruments herum in dem Kombiinstrument angeordnet.

Gemäß einer bevorzugten Ausführungsform der Erfindung wird vorgeschlagen, dass die Skalierungsstriche der mindestens einen Skala des mindestens einen Zeigerinstruments auf einer im Sichtfeld eines Fahrers des Kraftfahrzeugs angeordneten Anzeigefläche des mindestens einen Zeigerinstruments auf an sich herkömmliche Art und Weise fest aufgebracht sind. In diesem Sinne wird vorgeschlagen, dass die Skalierungsstriche der mindestens einen Skala des mindestens einen Zeigerinstruments auf der im Sichtfeld des Fahrers des Kraftfahrzeugs angeordneten Anzeigefläche des mindestens einen Zeigerinstruments mittels eines Gravur-, Ätz-, Präge- oder Druckverfahrens, besonders bevorzugt mittels eines Lasermarkierungsverfahrens durch Gravieren, Aufschäumen, Abtragen oder Verfärben, fest aufgebracht sind. Bei dieser Ausführungsform stellt das mindestens eine OLED-Display also nur die Zahlen der Skalen des mindestens einen Zeigerinstruments dar.

Gemäß einer alternativen Ausführungsform der Erfindung wird vorgeschlagen, dass das mindestens eine OLED-Display derart ausgebildet und in dem Kombiinstrument angeordnet ist, dass darauf - neben den Zahlen der Skala - auch mindestens ein Skalierungsstrich der mindestens einen Skala des mindestens einen Zeigerinstruments dargestellt werden kann. Dies hat den Vorteil einer zusätzlichen Flexibilität. Zudem kann das bisher erforderliche feste Aufbringen der Skalierungsstriche auf die Anzeigeflächen der Zeigerinstrumente entfallen. Auch auf eine oder mehrere zusätzliche Lichtquellen zum Hinterleuchten der fest aufgebrachten Skalierungsstriche bzw. der entsprechenden transparenten Elemente kann verzichtet werden. Das Kombiinstrument gemäß dieser Ausführungsform ist besonders kleinbauend und weist insbesondere eine sehr geringe Bauraumtiefe auf.

Eine weitere Vereinfachung des Aufbaus und der Montage des Kombiinstruments kann dadurch erreicht werden, dass das mindestens eine Zeigerinstrument des Kombiinstruments ein einziges OLED-Display aufweist, das derart ausgebildet und in dem Kombiinstrument angeordnet ist, dass darauf alle Skalierungsstriche der mindestens einen Skala des mindestens einen Zeigerinstruments dargestellt werden können. Vorzugsweise können auf dem OLED-Display dann auch noch alle Zahlen der Skale des Zeigerinstruments dargestellt werden. Alternativ wäre es aber auch denkbar, dass ein Zeigerinstrument zwei, vorzugsweise konzentrisch um die Drehachse des Zeigers ausgeordnete, bogenförmige OLED-Displays aufweist, wobei auf einem OLED-Display die Skalierungsstriche und auf dem anderen OLED-Display die Zahlen dargestellt werden.

Vorteilhafterweise umfassen die durch das analoge Zeigerinstrument angezeigten betriebsbezogenen Informationen eine aktuelle Geschwindigkeit des Kraftfahrzeugs, eine aktuelle Motordrehzahl, einen aktuellen Stand eines Kraftstofftanks, eine aktuelle Spannung einer Fahrzeugbatterie, einen aktuellen Ladedruck einer Motoraufladung, eine aktuelle Motoröltemperatur, einen aktuellen Motoröldruck, eine aktuelle Außentemperatur und/oder eine aktuelle Kühlwassertemperatur.

Gemäß einer anderen vorteilhaften Weiterbildung der Erfindung wird vorgeschlagen, dass das mindestens eine OLED-Display ausgebildet ist, in Abhängigkeit von einer über ein Benutzermenu des Kraftfahrzeugs eingestellten Nutzersprache automatisch ansteuerbar ist und in Abhängigkeit von der eingestellten Sprache unterschiedliche Zahlen und/oder Skalierungsstriche bzw. Zahlen und/oder Skalierungsstriche an unterschiedlichen Positionen auf dem mindestens einen OLED-Display darzustellen. Die Nutzersprache kann von einem Nutzer des Kraftfahrzeugs über einen Bordcomputer eingestellt werden. Die auf dem mindestens einen OLED-Display dargestellten Zahlen und/oder Skalierungsstriche können an die in dem der aktuell eingestellten Nutzersprache entsprechenden Land üblicherweise verwendete Maßeinheit (z.B. Umschalten zwischen metrischem und angloamerikanischem Maßsystem) oder auf die in dem der aktuell eingestellten Nutzersprache entsprechenden Land vorgesehenen gesetzlichen Vorgaben angepasst werden. Wenn bspw. in einem Land die Höchstgeschwindigkeit für Kraftfahrzeuge auf 120 km/h beschränkt ist, könnte es aufgrund der öffentlichen Meinung oder gesetzlicher Vorgaben nicht erwünscht/erlaubt sein, dass in diesem Land die Skalierung des Tachometers bis maximal 200 km/h geht. In diesem Fall könnte die Skalierung des Tachometers für dieses Land bspw. auf 140 km/h beschränkt werden. Die Anpassung erfolgt vorzugsweise automatisch nach Eingabe der Nutzersprache.

Alternativ oder zusätzlich ist es auch möglich, dass das mindestens eine OLED-Display ausgebildet ist, in Abhängigkeit von einer aktuellen Position des Kraftfahrzeugs automatisch ansteuerbar ist und in Abhängigkeit von der aktuellen Position unterschiedliche Zahlen und/oder Skalierungsstriche bzw. Zahlen und/oder Skalierungsstriche an unterschiedlichen Positionen auf dem mindestens einen OLED-Display darzustellen. Die aktuelle Position des Kraftfahrzeugs wird vorzugsweise mittels eines globalen Satelliten-Navigationssystems (GNSS) ermittelt. Das GNSS-Gerät kann integraler Bestandteil des Kraftfahrzeugs oder aber ein externes Gerät, bspw. als Bestandteil eines Mobiltelefons des Fahrers, sein. Die aktuelle Position könnte dann nach Anbindung des Mobiltelefons an den Bordcomputer des Kraftfahrzeugs, bspw. über Bluetooth, NFC oder WiFi (WLAN), von dem Mobiltelefon an den Bordcomputer übertragen und zur automatischen Ansteuerung des mindestens einen OLED-Displays herangezogen werden. Die auf dem mindestens einen OLED-Display dargestellten Zahlen und/oder Skalierungsstriche können an die in dem einer aktuellen Position des Kraftfahrzeugs entsprechenden Land üblicherweise verwendete Maßeinheit oder an die in dem einer aktuellen Position des Kraftfahrzeugs entsprechenden Land vorgesehenen gesetzlichen Vorgaben angepasst werden. Die Anpassung erfolgt vorzugsweise automatisch nach Ermittlung der aktuellen Position des Kraftfahrzeugs.

Ferner wäre es auch denkbar, dass das mindestens eine OLED-Display von einem Nutzer des Kraftfahrzeugs manuell ansteuerbar ist und in Abhängigkeit von einer aktuellen Nutzereinstellung unterschiedliche Zahlen und/oder Skalierungsstriche bzw. Zahlen und/oder Skalierungsstriche an unterschiedlichen Positionen auf dem mindestens einen OLED-Display darstellt. In diesem Sinne wäre es denkbar, dass die Darstellung auf dem mindestens einen OLED-Display, d.h. die Darstellung der Zahlen und/oder Skalierungsstriche der Skalen der analogen Zeigerinstrumente, über ein Benutzermenu des Bordcomputers zum Personalisieren des Kraftfahrzeugs eingestellt werden kann. Dabei kann die Darstellung auf dem mindestens einen OLED-Display an die persönlichen Vorlieben des Nutzers angepasst werden.

Schließlich wird vorgeschlagen, dass das mindestens eine OLED-Display ausgebildet ist, die Zahlen und/oder Skalierungsstriche in unterschiedlichen Farben darzustellen. In diesem Zusammenhang wäre es bspw. denkbar, die Zahlen und/oder Skalierungsstriche in Abhängigkeit von einem aktuell gewählten Fahrmodus (z.B. Eco, Comfort, Sport, Sport+, Individual), von dem aktuellen Fahrstil (z.B. sportlich dynamisch oder zurückhaltend verbrauchsschonend), von den persönlichen Vorlieben des Nutzers o.ä. in unterschiedlichen Farben darzustellen. Des Weiteren wäre es denkbar, die Darstellung der Zahlen und/oder Skalierungsstriche auf dem mindestens einen OLED-Display an die aktuelle Fahrzeugumgebung anzupassen. So wäre es bspw. denkbar, die Skalierung des Tachometers innerhalb geschlossener Ortschaften auf 80 km/h und außerhalb von Ortschaften auf 140 km/h zu begrenzen. Der Vorteil wäre, dass insbesondere bei der Fahrt in geschlossenen Ortschaften die Anzeige des Geschwindigkeitsbereichs viel breiter gespreizt ist und der Tachometer deshalb besser bzw. genauer abgelesen werden kann.

Weitere Merkmale und Vorteile der vorliegenden Erfindung werden nachfolgend anhand der Figuren näher erläutert. Es zeigen:
- Figur 1: ein aus dem Stand der Technik bekanntes Kombiinstrument;
- Figur 2: ein erfindungsgemäßes Kombiinstrument gemäß einer ersten bevorzugten Ausführungsform;
- Figur 3: ein erfindungsgemäßes Kombiinstrument gemäß einer zweiten bevorzugten Ausführungsform;
- Figuren 4a, 4b: verschiedene Arten der Darstellung einer Fahrzeuggeschwindigkeit auf einem Zeigerinstrument eines erfindungsgemäßen Kombiinstruments; und
- Figuren 5a, 5b: verschiedene Arten der Darstellung einer Motordrehzahl auf einem Zeigerinstrument eines erfindungsgemäßen Kombiinstruments.

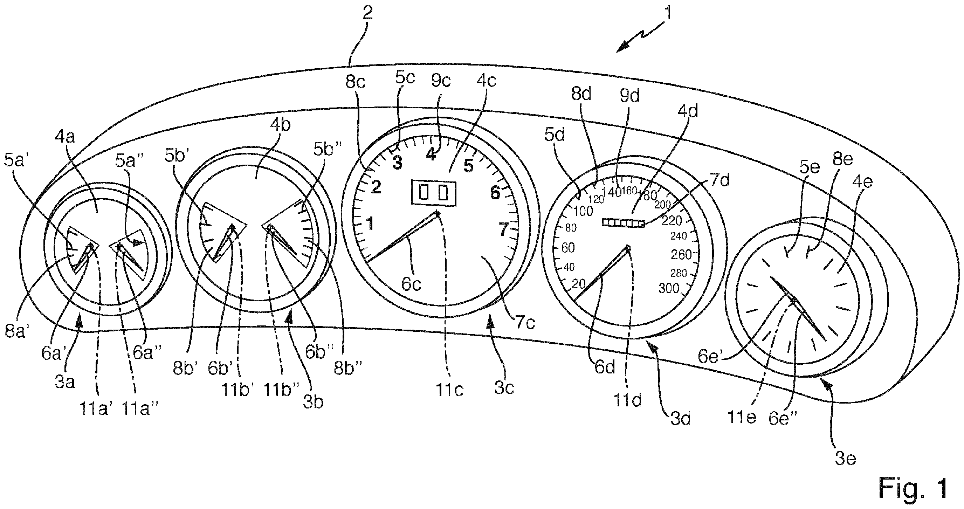

In Figur 1 ist ein aus dem Stand der Technik bekanntes Kombiinstrument in seiner Gesamtheit mit dem Bezugszeichen 1 bezeichnet. Es weist ein Gehäuse oder Tragelement 2 auf, in bzw. an dem mehrere Anzeigeeinrichtungen 3 befestigt sind. Das in Figur 1 beispielhaft gezeigte Kombiinstrument 1 umfasst fünf nebeneinander angeordnete analoge Zeigerinstrumente 3a bis 3e. Selbstverständlich kann das erfindungsgemäße Kombiinstrument 1 auch mehr oder weniger als die dargestellten fünf Zeigerinstrumente 3a bis 3e aufweisen. Ferner ist es denkbar, dass die Zeigerinstrumente 3a bis 3e nicht in der dargestellten Weise, sondern auf andere Weise nebeneinander und/oder übereinander und/oder versetzt zueinander in dem Kombiinstrument 1 angeordnet sind. Des Weiteren ist es denkbar, dass eines oder mehrere der analogen Zeigerinstrumente 3a bis 3e durch eine digitale multifunktionale Anzeigeeinrichtung, beispielsweise in Form einer LCD- oder LED-Anzeige (sogenanntes Display), ersetzt ist. Die Zeigerinstrumente 3 dienen zur Anzeige von betriebsbezogenen Informationen des Kraftfahrzeugs. Diese Informationen umfassen bspw. eine aktuelle Geschwindigkeit des Kraftfahrzeugs, eine aktuelle Motordrehzahl, einen aktuellen Stand eines Kraftstofftanks, eine aktuelle Spannung einer Fahrzeugbatterie, einen aktuellen Ladedruck einer Motoraufladung, eine aktuelle Motoröltemperatur, einen aktuellen Motoröldruck, eine aktuelle Außentemperatur und/oder eine aktuelle Kühlwassertemperatur.

Bei dem in Figur 1 gezeigten Beispiel des bekannten Kombiinstruments 1 weist das linke Zeigerinstrument 3a eine Anzeigefläche 4a auf, auf der links eine erste Skala 5a' beispielsweise für den Tankinhalt und rechts eine zweite Skala 5a" beispielsweise für die Batteriespannung angeordnet ist. Der ersten Skala 5a' ist ein erster Zeiger 6a` und der zweiten Skala 5a" ein zweiter Zeiger 6a" zugeordnet. In entsprechender Weise verfügt das daneben angeordnete Zeigerinstrument 3b über eine Anzeigefläche 4b, auf der links eine erste Skala 5b' beispielsweise für die Kühlwassertemperatur und rechts eine zweite Skala 5b" beispielsweise für den Öldruck aufgebracht ist. Der ersten Skala 5b' ist ein erster Zeiger 6b' und der zweiten Skala 5b" ein zweiter Zeiger 6b" zugeordnet. Ebenso weist das mittlere Zeigerinstrument 3c eine Anzeigefläche 4c auf, die mit einer Skala 5c beispielsweise für die aktuelle Motordrehzahl versehen ist. Der Skala 5c ist ein Zeiger 6c zugeordnet. Ferner ist auf der Anzeigefläche 4c eine LCD-, LED- oder beliebig andere digitale Anzeigeeinrichttung 7c integriert, auf der beispielsweise die aktuelle Fahrzeuggeschwindigkeit in digitaler Form (aktuell "0.0") angezeigt werden kann.

Das Zeigerinstrument 3d verfügt ebenfalls über eine Anzeigefläche 4d, auf der eine Skala 5d beispielsweise für die aktuelle Fahrzeuggeschwindigkeit angeordnet ist. Der Skala 5d ist ein Zeiger 6d zugeordnet. Ferner ist auf der Anzeigefläche 4d eine mechanische oder elektronische Anzeige 7d vorgesehen, um die zurückgelegte Fahrtstrecke anzuzeigen. Schließlich weist das rechte Zeigerinstrument 3e eine Anzeigefläche 4e auf, auf der eine Skala 5e beispielsweise für die aktuelle Uhrzeit ausgebildet ist. Der Skala 5e sind zwei Zeiger 6e` und 6e" zugeordnet, die zur Anzeige der aktuellen Stunden und Minuten vorgesehen sind.

Bei den analogen Zeigerinstrumenten 3 ist es derzeit so, dass ein Elektromotor, bspw. ein Schrittmotor, über eine Welle die Zeiger 6 in eine Drehbewegung um eine Drehachse 11 versetzt und in eine bestimmte Drehposition bewegt, welche dem aktuellen Wert einer darzustellenden Information entspricht. Damit der Fahrer des Kraftfahrzeugs die aktuelle Drehposition des Zeigers 6 einem bestimmten Wert der darzustellenden Information zuordnen kann, ist auf der im Sichtfeld des Fahrers des Kraftfahrzeugs angeordneten Anzeigefläche 4 des Zeigerinstruments 3 die Skala 5 mit Skalierungsstrichen 8 und/oder Zahlen 9 fest aufgebracht. Die Skalierungsstriche 8 und die Zahlen 9 der Skala 5 des Zeigerinstruments 3 können mittels eines Gravur-, Ätz-, Präge- oder Druckverfahrens, aber auch mittels eines Lasermarkierungsverfahrens durch Gravieren, Aufschäumen, Abtragen oder Verfärben, fest aufgebracht sein. Alternativ ist es auch denkbar, dass die Skalierungsstriche 8 und die Zahlen 9 der Skala 5 des Zeigerinstruments 3 aus der Anzeigefläche 4 des Zeigerinstruments 3 herausgestanzt sind, wobei in die ausgestanzten Bereiche transparente Elemente eingesetzt werden, so dass die Skalierungsstriche 8 und die Zahlen 9 durch an der Rückseite der Anzeigefläche 4 angeordnete Lichtquellen hinterleuchtet werden können.

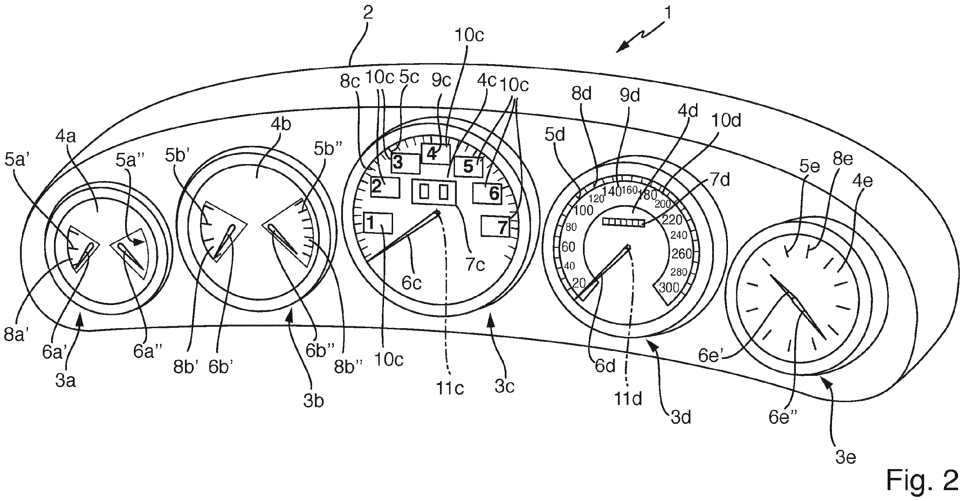

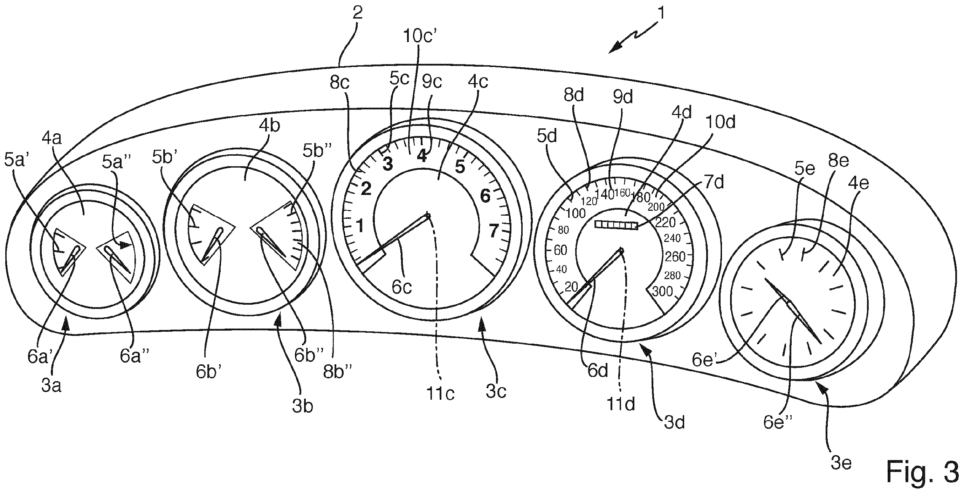

Gemäß der vorliegenden Erfindung wird vorgeschlagen, dass mindestens ein analoges Zeigerinstrument 3 des Kombiinstruments 1 mindestens ein OLED-Display 10 aufweist, das derart ausgebildet und in dem Kombiinstrument 1 angeordnet ist, dass darauf mindestens eine Zahl 9 der mindestens einen Skala 5 des mindestens einen analogen Zeigerinstruments 3 dargestellt werden kann. Ein entsprechendes Kombiinstrument 1 wird nachfolgend anhand der Figuren 2 und 3 näher erläutert.

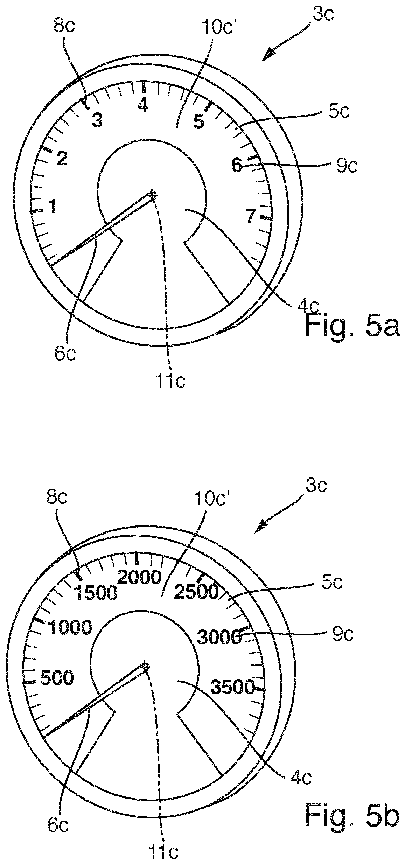

Bei dem in Figur 2 gezeigten Kombiinstrument 1 weist bspw. das mittlere Zeigerinstrument 3c mehrere OLED-Displays 10c auf, wobei auf jedem OLED-Display 10c jeweils eine Zahl 9c der Skala 5c das Zeigerinstrument 3c dargestellt werden kann. Selbstverständlich wäre es auch denkbar, dass die OLED-Displays 10c derart ausgebildet sind, dass auf ihnen mehrere Zahlen 9c der Skala 5c dargestellt werden können. Die OLED-Displays 10c erlauben eine flexible Darstellung der Zahlen 9c, in dem vorliegenden Fall der Zahlenwerte der Drehzahl. Statt der dargestellten Zahlen "1", "2", "3", ... (Drehzahl = Zahl x 1.000) wäre es auch denkbar, dass bei entsprechender Ansteuerung der OLED-Displays 10c auf diesen die Zahlen "1000", "2000", "3000", ... (Drehzahl = Zahl) dargestellt werden. Ebenso wäre es denkbar, durch entsprechende Ansteuerung der OLED-Displays 10c den dargestellten maximalen Drehzahlwert (7.000 U/min) zu verringern, bspw. auf 3.500 U/min, und den dargestellten Drehzahlbereich zu spreizen (vgl. Figuren 5a und 5b).

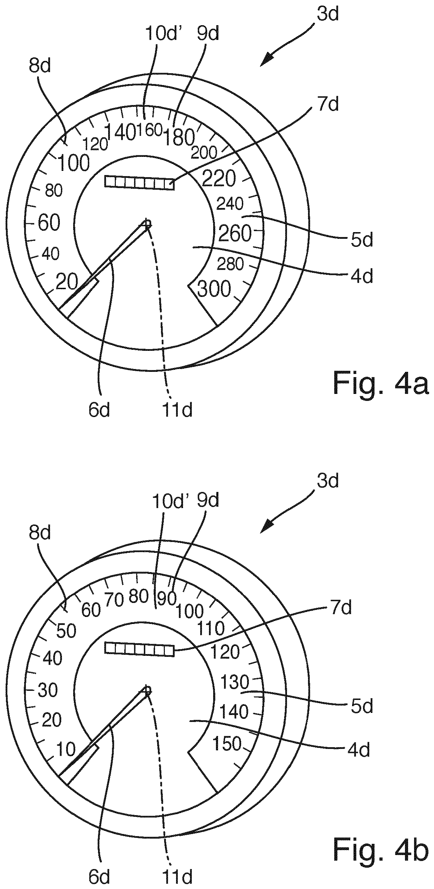

Das Zeigerinstrument 3d weist ein einziges OLED-Display 10d auf, auf dem alle Zahlen 9d der Skala 5d des Zeigerinstruments 3d dargestellt werden können. In dem Beispiel erlaubt das OLED-Display 10d eine flexible Darstellung der Zahlenwerte der Geschwindigkeit. Statt der dargestellten Zahlenwerte in km/h, könnten diese auch in miles/h angezeigt werden. Ebenso wäre es denkbar, die dargestellte maximale Geschwindigkeit (300 km/h), bspw. bei Fahrt innerhalb geschlossener Ortschaften, zu verringern, bspw. auf 150 km/h, und den dargestellten Geschwindigkeitsbereich zu spreizen, um dem Fahrer ein genaueres Ablesen des Tachometers bei niedrigeren Geschwindigkeiten zu ermöglichen (vgl. Figuren 4a und 4b). Die Verwendung eines einzigen OLED-Displays 10d zur Darstellung aller Zahlen 9d der Skala 5d des analogen Zeigerinstruments 3d hat den Vorteil, dass die dargestellten Informationen besonders flexibel und nahezu beliebig skaliert dargestellt werden können. Zudem ist die Montage und Herstellung des Kombiinstruments 1 dadurch einfacher und kostengünstiger. Das OLED-Display 10d kann als Einheit einfach im Sichtbereich des Fahrers in dem Kombiinstrument 1 angeordnet und befestigt und auf einer vom Fahrer abgewandten Rückseite elektrisch kontaktiert werden.

Das OLED-Display 10d ist bogenförmig ausgebildet und um eine Drehachse 11d des Zeigers 6d des Zeigerinstruments 3d herum in dem Kombiinstrument 1 angeordnet. Bevorzugt ist das OLED-Display 10d kreisbogenförmig ausgebildet und äquidistant um eine Drehachse 11d des Zeigers 6d des Zeigerinstruments 3d herum in dem Kombiinstrument 1 angeordnet. Es wäre aber auch denkbar, dass das bogenförmige OLED-Display 10d ellipsenförmig oder mehreckig ausgebildet ist. Der Abstand zwischen dem OLED-Display 10d und der Drehachse 11d des Zeigers 6d wäre dann nicht in allen Drehwinkeln um die Drehachse 11d äquidistant. Sinnvollerweise ist das mindestens eine OLED-Display 10c, 10d in unmittelbarer Nähe zu den Skalierungsstrichen 8c, 8d angeordnet, so dass eine problemlose Zuordnung der auf den OLED-Display(s) 10c, 10d dargestellten Zahlen 9c, 9d zu den entsprechenden Skalierungsstrichen 8c, 8d möglich ist.

Es wird angemerkt, dass in dem Beispiel der Figur 2 die Skalierungsstriche 8c, 8d der Skalen 5c, 5d nach wie vor auf an sich bekannte Weise auf der im Sichtfeld des Fahrers des Kraftfahrzeugs angeordneten Anzeigeflächen 4c, 4d der Zeigerinstrumente 3c, 3d fest aufgebracht sind. Dabei können die Skalierungsstriche 8c, 8d auf der Anzeigefläche 4c, 4d der Zeigerinstrumente 3c, 3d mittels eines Gravur-, Ätz-, Präge- oder Druckverfahrens, besonders bevorzugt mittels eines Lasermarkierungsverfahrens durch Gravieren, Aufschäumen, Abtragen oder Verfärben, fest aufgebracht sein. In diesem Fall ermöglicht die Erfindung also ein flexibles Umschalten der Zahlen 9c; 9d der Skalen 5c, 5d der Zeigerinstrumente 3c, 3d zwischen verschiedenen Maßeinheiten (z.B. Geschwindigkeitsmaßeinheiten (km/h oder mph), Volumenmaßeinheiten (Gallonen oder Liter), Temperaturmaßeinheiten (°C oder °F) und/oder Maßeinheiten für den Kraftstoffverbrauch (I/100 km oder km/I)). Zudem können die dargestellten Zahlen 9c; 9d in Format und Inhalt an die Wünsche des jeweiligen Nutzers des Kraftfahrzeugs individuell angepasst werden.

Gleichzeitig wird im Rahmen der Erfindung der grundsätzliche Aufbau kostengünstiger, robuster und bewährter analoger Zeigerinstrumente 3 beibehalten. Das mindestens eine OLED-Display 10c, 10d kann besonders einfach und kostengünstig auf der im Sichtbereich des Fahrers befindlichen Anzeigefläche 4c, 4d des analogen Zeigerinstruments 3c; 3d oder auf ein anderes geeignetes Trägerelement im Inneren des Kombiinstruments 1 aufgebracht und befestigt und elektrisch kontaktiert werden. Der dafür erforderliche Bauraum ist aufgrund der geringen Tiefe des mindestens einen OLED-Displays 10c, 10d minimal. Gegenüber herkömmlichen analogen Zeigerinstrumenten 3 mit fest vorgegebenen hinterleuchteten Skalierungsstrichen 8 und Zahlen 9 bietet die vorgeschlagene Lösung mit mindestens einem OLED-Display 10 sogar noch geringere Anforderungen an den Bauraum, da auf zusätzliche Lichtquellen zum Hinterleuchten und auf transparente Elemente im Bereich der Skalierungsstriche 8 und Zahlen 9 verzichtet werden kann.

In dem Ausführungsbeispiel der Figur 3 weisen die Zeigerinstrumente 3c und 3d ebenfalls jeweils mindestens ein OLED-Display 10c'; 10d' auf. In diesem Beispiel sind die OLED-Displays 10c`, 10d' jedoch derart ausgebildet und in dem Kombiinstrument 1 angeordnet, dass darauf - neben den Zahlen 9c, 9d der Skalen 5c, 5d - auch mindestens ein Skalierungsstrich 8c, 8d der Skalen 5c, 5d dargestellt werden können. Dabei weisen die Zeigerinstrumente 3c, 3d des Kombiinstruments 1 jeweils ein einziges OLED-Display 10c`, 10d' auf, das derart ausgebildet und in dem Kombiinstrument 1 angeordnet ist, dass darauf alle Skalierungsstriche 8c, 8d und alle Zahlen 9c, 9d der Skala 5c; 5d des Zeigerinstruments 3c; 3d dargestellt werden können. Dies hat den Vorteil einer zusätzlichen Flexibilität bezüglich des Designs und des Inhalts der auf den Displays 10c`, 10d` dargestellten Bilder. Insbesondere
- können die Skalen 5c, 5d bzw. die entsprechenden Skalierungsstriche 8c, 8d und Zahlen 9c, 9d beliebig gespreizt werden,
- kann die Spreizung der Skalen 5c, 5d linear oder nicht-linear, z.B. progressiv oder abschnittsweise mit unterschiedlichen Spreizungen, erfolgen,
- kann der Anzeigebereich der Skalen 5c, 5d beliebig eingestellt werden,
- können die dargestellten Skalierungsstriche 8c, 8d und Zahlen 9c, 9d der Skalen 5c, 5d an unterschiedliche Maßeinheiten angepasst werden,
- kann das Aussehen/Design der dargestellten Skalierungsstriche 8c, 8d und Zahlen 9c, 9d der Skalen 5c, 5d beliebig variiert werden,
- kann die Variation der Darstellung u.a. die verwendete Schriftart, Strichdicke, Farbe und Größe betreffen,
- kann das bisher erforderliche feste Aufbringen der Zahlen 9c, 9d und/oder Skalierungsstriche 8c, 8d auf die Anzeigeflächen 4c, 4d der Zeigerinstrumente 3c, 3d komplett entfallen,
- kann auf eine oder mehrere zusätzliche Lichtquellen zum Hinterleuchten der fest aufgebrachten Zahlen 9c, 9d und/oder Skalierungsstriche 8c, 8d bzw. der entsprechenden transparenten Elemente verzichtet werden.

Vorzugsweise wird das mindestens eine OLED-Display 10c, 10d, 10c`, 10d` in Abhängigkeit von einer über ein Benutzermenu des Kraftfahrzeugs eingestellten Nutzersprache automatisch angesteuert und werden in Abhängigkeit von der eingestellten Sprache unterschiedliche Zahlen 9c, 9d und/oder Skalierungsstriche 8c, 8d bzw. Zahlen 9c, 9d und/oder Skalierungsstriche 8c, 8d an unterschiedlichen Positionen auf dem mindestens einen OLED-Display 10c, 10d, 10c`, 10d' dargestellt. Die Nutzersprache kann von einem Nutzer des Kraftfahrzeugs bspw. über einen Bordcomputer eingestellt werden. Die auf dem mindestens einen OLED-Display 10c, 10d, 10c`, 10d` dargestellten Zahlen 9c, 9d und/oder Skalierungsstriche 8c, 8d können auf die in dem der aktuell eingestellten Nutzersprache entsprechenden Land üblicherweise verwendete Maßeinheit (z.B. Umschalten zwischen metrischem und angloamerikanischem Maßsystem) oder auf die in dem der aktuell eingestellten Nutzersprache entsprechenden Land vorgesehenen gesetzlichen Vorgaben (z.B. Umschalten zwischen SAE (Society of Automotive Engineers)-Standards und ECE (Economic Commission for Europe)-Standards angepasst werden. Wenn bspw. in einem Land die Höchstgeschwindigkeit für Kraftfahrzeuge auf 120 km/h begrenzt ist, könnte es aufgrund der öffentlichen Meinung oder gesetzlicher Vorgaben nicht erwünscht/ erlaubt sein, dass in diesem Land die Skalierung des Tachometers bis maximal 300 km/h geht. In diesem Fall könnte die Skalierung des Tachometers für dieses Land bspw. auf 150 km/h beschränkt und die OLED-Displays 10c, 10d, 10c`, 10d` entsprechend angesteuert werden (vgl. Figuren 4a und 4b). Die Anpassung erfolgt vorzugsweise automatisch nach Eingabe der Nutzersprache.

Alternativ oder zusätzlich ist es auch möglich, dass das mindestens eine OLED-Display 10c, 10d, 10c', 10d' in Abhängigkeit von einer aktuellen Position des Kraftfahrzeugs automatisch angesteuert wird und in Abhängigkeit von der aktuellen Position unterschiedliche Zahlen 9c, 9d und/oder Skalierungsstriche 8c, 8d bzw. Zahlen 9c, 9d und/oder Skalierungsstriche 8c, 8d an unterschiedlichen Positionen auf dem mindestens einen OLED-Display 10c, 10d, 10c`, 10d' darstellt. Die aktuelle Position des Kraftfahrzeugs wird vorzugsweise mittels eines globalen Satelliten-Navigationssystems (GNSS) ermittelt. Das GNSS-Gerät kann integraler Bestandteil des Kraftfahrzeugs oder aber ein externes Gerät, bspw. als Bestandteil eines Mobiltelefons des Fahrers, sein. Die aktuelle Position könnte dann nach Anbindung des Mobiltelefons an einen Bordcomputer des Kraftfahrzeugs, bspw. über Bluetooth, NFC, WiFi (WLAN) oder ein WAN (z.B. das Internet über das Mobilfunknetz), von dem Mobiltelefon an den Bordcomputer übertragen und zur Ansteuerung des mindestens einen OLED-Displays 10c, 10d, 10c`, 10d` herangezogen werden. Die auf dem mindestens einen OLED-Display 10c, 10d, 10c`, 10d` dargestellten Zahlen 9c, 9d und/oder Skalierungsstriche 8c, 8d können an die in dem einer aktuellen Position des Kraftfahrzeugs entsprechenden Land üblicherweise verwendete Maßeinheit oder an die in dem einer aktuellen Position des Kraftfahrzeugs entsprechenden Land vorgesehenen gesetzlichen Vorgaben angepasst werden. Die Anpassung erfolgt vorzugsweise automatisch nach Ermittlung der aktuellen Position des Kraftfahrzeugs.

Ferner wäre es auch denkbar, dass das mindestens eine OLED-Display 10c, 10d, 10c`, 10d' von einem Nutzer des Kraftfahrzeugs manuell angesteuert wird und in Abhängigkeit von einer aktuellen Nutzereinstellung unterschiedliche Zahlen 9c, 9d und/oder Skalierungsstriche 8c, 8d bzw. Zahlen 9c, 9d und/oder Skalierungsstriche 8c, 8d an unterschiedlichen Positionen auf dem mindestens einen OLED-Display 10c, 10d, 10c`, 10d' darstellt. In diesem Sinne wäre es denkbar, dass die Darstellung auf dem mindestens einen OLED-Display 10c, 10d, 10c', 10d', d.h. die Darstellung der Zahlen 9c, 9d und/oder Skalierungsstriche 8c, 8d der Skalen 5c, 5d der analogen Zeigerinstrumente 3c, 3d, über ein Benutzermenu des Bordcomputers zum Personalisieren des Kraftfahrzeugs eingestellt werden kann. Das erlaubt eine Anpassung der Darstellung auf dem mindestens einen OLED-Display 10c, 10d, 10c`, 10d' an die persönlichen Vorlieben des Nutzers.

Schließlich wird vorgeschlagen, dass das mindestens eine OLED-Display 10c, 10d, 10c`, 10d` ausgebildet ist, die Zahlen 9c, 9d und/oder Skalierungsstriche 8c, 8d in unterschiedlichen Farben darzustellen. In diesem Zusammenhang wäre es bspw. denkbar, die Zahlen 9c, 9d und/oder Skalierungsstriche 8c, 8d in Abhängigkeit von einem aktuell gewählten Fahrmodus (z.B. Eco (grün), Comfort (gelb), Sport (orange), Sport+ (rot), Individual (blau)), von dem aktuellen Fahrstil (z.B. sportlich dynamisch (rot) oder zurückhaltend verbrauchsschonend (grün)), von den persönlichen Vorlieben des Nutzers o.ä. in unterschiedlichen Farben darzustellen. Des Weiteren wäre es denkbar, die Darstellung der Zahlen 9c, 9d und/oder Skalierungsstriche 8c, 8d auf dem mindestens einen OLED-Display 10c, 10d, 10c`, 10d' an die aktuelle Fahrzeugumgebung bzw. Fahrzeugposition anzupassen. So wäre es bspw. denkbar, die Skalierung des Tachometers innerhalb geschlossener Ortschaften auf 80 km/h und außerhalb von Ortschaften auf 140 km/h zu begrenzen. Der Vorteil wäre, dass insbesondere bei der Fahrt in geschlossenen Ortschaften die Anzeige des Geschwindigkeitsbereichs viel breiter gespreizt ist und der Tachometer deshalb besser bzw. genauer abgelesen werden kann.

Es versteht sich, dass bei einer Anpassung der Skalierung der Skalen 5c, 5d an eine andere Maßeinheit, bei einer Spreizung der Skalierung der Skalen 5c, 5d oder einer anderweitigen Veränderung der Darstellung der Skalierungsstriche 8c, 8d und Zahlen 9c, 9d der Skalen 5c, 5d in jedem Fall auch die Ansteuerung der Zeiger 6c, 6d bzw. des jeweiligen Elektromotors zum Antrieb der Zeiger 6c, 6d entsprechend angepasst werden muss, damit der Zeiger 6c, 6d auch bei veränderter Skala 5c, 5d stets auf die richtigen Zahlenwerte zeigt. Eine solche Anpassung des Zeigers 6 eines analogen Zeigerinstruments 3 kann entfallen, wenn auf dem OLED-Display 10 des Zeigerinstruments 3 lediglich die Zahlen 9 bzw. die Skalierungsstriche 8 der Skala 5 statisch dargestellt werden, d.h. ohne die Möglichkeit einer Spreizung oder Skalierung, einer Anpassung an unterschiedliche Maßeinheiten und/oder einer manuellen Anpassung der Darstellung auf dem OLED-Display 10 durch den Nutzer. Selbst in diesem Fall hätte die Erfindung den Vorteil, dass die Zahlen 9 und die Skalierungsstriche 8 besonders kontrastreich (bei Tag und bei Nacht), in vorgegebenen Farben und in einem gewünschten Design dargestellt werden können. Ferner könnten für verschiedene Fahrzeugtypen die gleichen Kombiinstrumente 1 benutzt werden, wobei zur Anpassung an den jeweiligen Fahrzeugtyp lediglich die Farbe bzw. das Design der auf dem mindestens einen OLED-Display 10 dargestellten Zahlen 9 und/oder Skalierungsstriche 8 verändert wird. Zudem kann die Beschriftung der Anzeigefläche 4 des Zeigerinstruments 3 entfallen.

Obwohl in den beschriebenen Ausführungsbeispielen der Figuren 2 und 3 lediglich in den analogen Zeigerinstrumenten 3c, 3d die jeweilige Skala 5c, 5d zumindest teilweise auf mindestens einem OLED-Display 10c, 10d, 10c`, 10d' dargestellt ist, wäre es selbstverständlich denkbar, alternativ oder zusätzlich OLED-Displays 10 auch in anderen Zeigerinstrumenten 3 des Kombiinstruments 1, bspw. in den Zeigerinstrumenten 3a, 3b, 3e, vorzusehen. Zudem wäre ein Kombiinstrument 1 denkbar, bei dem in einem der Zeigerinstrumente 3 ein OLED-Display 10 vorgesehen ist, das lediglich die Zahlen 9 darstellt, wobei die Skalierungsstriche 8 fest auf die Anzeigefläche 4 des Zeigerinstruments 3 aufgetragen sind, und in einem anderen der Zeigerinstrumente 3 ein OLED-Display 10 vorgesehen ist, das sowohl Zahlen 9 als auch Skalierungsstriche 8 darstellt.

Zusammenfassend kann festgehalten werden, dass durch die vorliegende Erfindung ein Kombiinstrument 1 vorgeschlagen wird, das mit einem besonders geringen Fertigungsaufwand hergestellt werden kann. Das feste Auftragen statischer Skalen 5 auf die Anzeigeflächen 4 der Zeigerinstrumente 3 kann entfallen. Stattdessen werden einfach die OLED-Displays 10 auf der Anzeigefläche 4 oder einem anderen Trägerelement im Inneren des Kombiinstruments 1 montiert und rückwärtig elektrisch kontaktiert. Der Teileaufwand sowie der erforderliche Bauraum werden erheblich reduziert, da auf zusätzliche Lichtquellen zum Hinterleuchten der Skalierungsstriche 8 und Zahlen 9 der Skalen 5 und auf transparente Elemente im Bereich der Skalierungsstriche 8 und Zahlen 9 verzichtet werden kann. Das OLED-Display 10 kann als eine OLED-Folie ausgebildet sein, die auf die Anzeigefläche 4 des Zeigerinstruments 3 oder ein anderes Trägerelement des Kombiinstruments 1 aufgeklebt werden kann. Dazu kann die Rückseite der OLED-Folie 10 mit einer selbstklebenden Beschichtung versehen sein. Die Anzeigefläche 4 oder das Trägerelement kann mit einer Vertiefung zur Aufnahme des OLED-Displays 10 versehen sein. Ferner kann bei der Erfindung die auf dem mindestens einen OLED-Display 10 dargestellte Skala 5 der Zeigerinstrumente 3 flexibel verändert und angepasst werden.

In den Figuren 4a und 4b sind jeweils beispielhaft analoge Zeigerinstrumente 3d des erfindungsgemäßen Kombiinstruments 1 im Ausschnitt dargestellt. Die beiden Figuren unterscheiden sich dadurch, dass auf dem OLED-Display 10d' jeweils unterschiedliche Skalen 5d mit verschiedenen Skalierungsstrichen 8d und Zahlen 9d dargestellt sind. Während in Figur 4a die Skala 5d für die Fahrzeuggeschwindigkeit bis maximal "300" (km/h) geht, liegt die in Figur 4b dargestellte Maximalgeschwindigkeit bei "150" (km/h) und die Skalierung der Geschwindigkeit ist entsprechend linear gespreizt. Dies ermöglicht ein genaueres Ablesen der aktuellen Fahrzeuggeschwindigkeit bei niedrigen Geschwindigkeiten. Selbstverständlich wäre es auch denkbar, die Spreizung der auf dem OLED-Display 10d' dargestellten Geschwindigkeitswerte 9d nicht linear, sondern beispielsweise progressiv auszugestalten. Dabei wäre beispielsweise die Spreizung in niedrigen Geschwindigkeitsbereichen größer als in höheren Geschwindigkeitsbereichen. Ebenso wäre es denkbar, statt einer Spreizung der Skalierung für die Geschwindigkeit in der gleichen Maßeinheit (km/h) die Geschwindigkeitswerte 9d in einer anderen Maßeinheit (miles/h) darzustellen.

In den Figuren 5a und 5b sind jeweils beispielhaft analoge Zeigerinstrumente 3c des erfindungsgemäßen Kombiinstruments 1 im Ausschnitt dargestellt. Die beiden Figuren unterscheiden sich dadurch, dass auf dem OLED-Display 10c' jeweils unterschiedliche Skalen 5c mit verschiedenen Skalierungsstrichen 8c und Zahlen 9c dargestellt sind. Während in Figur 5a die Skala 5c für die Motordrehzahl bis maximal "7" (× 1.000 U/min) geht, liegt die in Figur 5b dargestellte Maximaldrehzahl bei "3.500" (U/min), und die Skalierung der Drehzahl ist entsprechend linear gespreizt. Dies ermöglicht ein genaueres Ablesen der aktuellen Motordrehzahl. Auf diese Weise kann der dargestellte Drehzahlbereich beispielsweise an den in dem Kraftfahrzeug eingesetzten Motortyp (z.B. Benzinmotor oder Dieselmotor) angepasst werden. Selbstverständlich wäre es auch denkbar, die Spreizung der auf dem OLED-Display 10c' dargestellten Drehzahlwerte 9c nicht linear, sondern beispielsweise progressiv auszugestalten, sodass die aktuelle Motordrehzahl insbesondere bei niedrigen Drehzahlen genauer abgelesen werden kann.

## Patentansprüche

1. Kombiinstrument (1) eines Kraftfahrzeugs, umfassend mindestens ein analoges Zeigerinstrument (3) zur Anzeige von betriebsbezogenen Informationen betreffend das Kraftfahrzeug, das oder jedes Zeigerinstrument (3) umfassend mindestens einen Zeiger (6) und mindestens eine dem oder jedem Zeiger (6) zugeordnete Skala (5) mit Skalierungsstrichen (8) und Zahlen (9),
wobei mindestens ein analoges Zeigerinstrument (3) des Kombiinstruments (1) mindestens ein OLED-Display (10) aufweist, das derart ausgebildet und in dem Kombiinstrument (1) angeordnet ist, dass darauf mindestens eine Zahl (9) der mindestens einen Skala (5) des mindestens einen analogen Zeigerinstruments (3) darstellbar ist,
**dadurch gekennzeichnet, dass**
das OLED-Display (10d) bogenförmig ausgebildet ist und um eine Drehachse (11d) des mindestens einen Zeigers (6d) des mindestens einen Zeigerinstruments (3d) herum in dem Kombiinstrument (1) angeordnet ist und
das mindestens eine OLED-Display (10) auf einer im Sichtfeld eines Fahrers des Kraftfahrzeugs angeordneten Anzeigefläche (4) des mindestens einen Zeigerinstruments (3) aufgebracht ist.

2. Kombiinstrument (1) nach Anspruch 1, **dadurch gekennzeichnet, dass** die Anzeigefläche (4) des mindestens einen Zeigerinstruments (3) eine Vertiefung zur Aufnahme des mindestens einen OLED-Displays (10) aufweist.

3. Kombiinstrument (1) nach Anspruch 1 oder 2, **dadurch gekennzeichnet, dass** das mindestens eine Zeigerinstrument (3d) des Kombiinstruments (1) ein einziges OLED-Display (10d) aufweist, das derart ausgebildet und in dem Kombiinstrument (1) angeordnet ist, dass darauf alle Zahlen (9d) der mindestens einen Skala (5d) des mindestens einen Zeigerinstruments (3d) darstellbar sind.

4. Kombiinstrument (1) nach einem der vorhergehenden Ansprüche, **dadurch gekennzeichnet, dass** das OLED-Display (10d) kreisbogenförmig ausgebildet ist und äquidistant um eine Drehachse (11d) des mindestens einen Zeigers (6d) des mindestens einen Zeigerinstruments (3d) herum in dem Kombiinstrument (1) angeordnet ist.

5. Kombiinstrument (1) nach einem der vorhergehenden Ansprüche, **dadurch gekennzeichnet, dass** die Skalierungsstriche (8) der mindestens einen Skala (5) des mindestens einen Zeigerinstruments (3) auf der Anzeigefläche (4) des mindestens einen Zeigerinstruments (3) fest aufgebracht sind.

6. Kombiinstrument (1) nach einem der vorhergehenden Ansprüche, **dadurch gekennzeichnet, dass** die Skalierungsstriche (8) der mindestens einen Skala (5) des mindestens einen Zeigerinstruments (3) auf der Anzeigefläche (4) des mindestens einen Zeigerinstruments (3) mittels eines Gravur-, Ätz-, Präge- oder Druckverfahrens, besonders bevorzugt mittels eines Lasermarkierungsverfahrens durch Gravieren, Aufschäumen, Abtragen oder Verfärben, fest aufgebracht sind.

7. Kombiinstrument (1) nach einem der Ansprüche 1 bis 5, **dadurch gekennzeichnet, dass** das mindestens eine OLED-Display (10c`; 10d`) derart ausgebildet und in dem Kombiinstrument (1) angeordnet ist, dass darauf mindestens ein Skalierungsstrich (8c; 8d) der mindestens einen Skala (5c; 5d) des mindestens einen Zeigerinstruments (3c; 3d) darstellbar ist.

8. Kombiinstrument (1) nach Anspruch 7, **dadurch gekennzeichnet, dass** das mindestens eine Zeigerinstrument (3c; 3d) des Kombiinstruments (1) ein einziges OLED-Display (10c`; 10d`) aufweist, das derart ausgebildet und in dem Kombiinstrument (1) angeordnet ist, dass darauf alle Skalierungsstriche (8c; 8d) der mindestens einen Skala (5c; 5d) des mindestens einen Zeigerinstruments (3c; 3d) darstellbar sind.

9. Kombiinstrument (1) nach einem der vorhergehenden Ansprüche, **dadurch gekennzeichnet, dass** die durch das analoge Zeigerinstrument (3) angezeigten betriebsbezogenen Informationen eine aktuelle Geschwindigkeit des Kraftfahrzeugs, eine aktuelle Motordrehzahl, einen aktuellen Stand eines Kraftstofftanks, eine aktuelle Spannung einer Fahrzeugbatterie, einen aktuellen Ladedruck einer Motoraufladung, eine aktuelle Motoröltemperatur, einen aktuellen Motoröldruck, eine aktuelle Außentemperatur und/oder eine aktuelle Kühlwassertemperatur umfassen.

10. Kombiinstrument (1) nach einem der vorhergehenden Ansprüche, **dadurch gekennzeichnet, dass** das mindestens eine OLED-Display (10) in Abhängigkeit von einer über ein Benutzermenu des Kraftfahrzeugs eingestellten Nutzersprache automatisch ansteuerbar ist und in Abhängigkeit von der eingestellten Sprache unterschiedliche Zahlen (9) und/oder Skalierungsstriche (8) bzw. Zahlen (9) und/oder Skalierungsstriche (8) an unterschiedlichen Positionen auf dem mindestens einen OLED-Display (10) darstellt.

11. Kombiinstrument (1) nach einem der vorhergehenden Ansprüche, **dadurch gekennzeichnet, dass** das mindestens eine OLED-Display (10) in Abhängigkeit von einer mittels eines globalen Satelliten-Navigationssystems (GNSS) ermittelten aktuellen Position des Kraftfahrzeugs automatisch ansteuerbar ist und in Abhängigkeit von der aktuellen Position unterschiedliche Zahlen (9) und/oder Skalierungsstriche (8) bzw. Zahlen (9) und/oder Skalierungsstriche (8) an unterschiedlichen Positionen auf dem mindestens einen OLED-Display (10) darstellt.

12. Kombiinstrument (1) nach einem der vorhergehenden Ansprüche, **dadurch gekennzeichnet, dass** das mindestens eine OLED-Display (10) von einem Nutzer des Kraftfahrzeugs manuell ansteuerbar ist und in Abhängigkeit von einer aktuellen Nutzereinstellung unterschiedliche Zahlen (9) und/oder Skalierungsstriche (8) bzw. Zahlen (9) und/oder Skalierungsstriche (8) an unterschiedlichen Positionen auf dem mindestens einen OLED-Display (10) darstellt.

13. Kombiinstrument (1) nach einem der vorhergehenden Ansprüche, **dadurch gekennzeichnet, dass** das mindestens eine OLED-Display (10) ausgebildet ist, unterschiedliche Zahlen (9) und/oder Skalierungsstriche (8) bzw. Zahlen (9) und/oder Skalierungsstriche (8) an unterschiedlichen Positionen auf dem mindestens einen OLED-Display (10) in Abhängigkeit von einem oder mehreren der nachfolgenden Parameter darzustellen:
- in dem einer aktuell eingestellten Nutzersprache entsprechenden Land üblicherweise verwendete Maßeinheit,
- in dem einer aktuellen Position des Kraftfahrzeugs entsprechenden Land üblicherweise verwendete Maßeinheit,
- in dem einer aktuell eingestellten Nutzersprache entsprechenden Land vorgesehenen gesetzlichen Vorgaben,
- in dem einer aktuellen Position des Kraftfahrzeugs entsprechenden Land vorgesehenen gesetzlichen Vorgaben, und
- persönliche Vorlieben des Nutzers hinsichtlich der Darstellung auf dem mindestens einen OLED-Display (10).

14. Kombiinstrument (1) nach einem der vorhergehenden Ansprüche, **dadurch gekennzeichnet, dass** das mindestens eine OLED-Display (10) ausgebildet ist, die Zahlen (9) und/oder Skalierungsstriche (8) in unterschiedlichen Farben darzustellen.

## Claims

1. Instrument cluster (1) of a motor vehicle, comprising at least one analog indicator instrument (3) for displaying operation-related information relating to the motor vehicle, the or each indicator instrument (3) comprising at least one indicator (6) and at least one scale (5) with scaling lines (8) and numbers (9) associated with the or each indicator (6),
at least one analog pointer instrument (3) of the instrument cluster (1) having at least one OLED display (10) which is designed and arranged in the instrument cluster (1) in such a way that at least one number (9) of the at least one scale (5) of the at least one analog indicator instrument (3) can be displayed thereon,
**characterized in that**
the OLED display (10d) is of arcuate design and is arranged in the instrument cluster (1) around an axis of rotation (11d) of the at least one pointer (6d) of the at least one indicator instrument (3d), and
the at least one OLED display (10) is applied to a display area (4) of the at least one indicator instrument (3) arranged in the field of vision of a driver of the motor vehicle.

2. Instrument cluster (1) according to claim 1, **characterized in that** the display area (4) of the at least one indicator instrument (3) has a recess for accommodating the at least one OLED display (10).

3. Instrument cluster (1) according to claim 1 or 2, **characterized in that** the at least one indicator instrument (3d) of the instrument cluster (1) has a single OLED display (10d) which is designed and arranged in the instrument cluster (1) in such a way that all the numbers (9d) of the at least one scale (5d) of the at least one indicator instrument (3d) can be displayed on it.

4. Instrument cluster (1) according to one of the preceding claims, **characterized in that** the OLED display (10d) is circular arc-shaped and is arranged equidistantly around an axis of rotation (11d) of the at least one indicator (6d) of the at least one indicator instrument (3d) in the instrument cluster (1).

5. Instrument cluster (1) according to one of the preceding claims, **characterized in that** the scale lines (8) of the at least one scale (5) of the at least one indicator instrument (3) are fixedly applied to the display area (4) of the at least one indicator instrument (3).

6. Instrument cluster (1) according to one of the preceding claims, **characterized in that** the scale lines (8) of the at least one scale (5) of the at least one indicator instrument (3) are fixedly applied to the display area (4) of the at least one indicator instrument (3) by means of an engraving, etching, embossing or printing process, particularly preferably by means of a laser marking process by engraving, foaming, ablation or discoloration.

7. Instrument cluster (1) according to one of claims 1 to 5, **characterized in that** the at least one OLED display (10c'; 10d') is designed and arranged in the instrument cluster (1) in such a way that at least one scale line (8c; 8d) of the at least one scale (5c; 5d) of the at least one indicator instrument (3c; 3d) can be displayed thereon.

8. Instrument cluster (1) according to claim 7, **characterized in that** the at least one indicator instrument (3c; 3d) of the instrument cluster (1) has a single OLED display (10c'; 10d') which is designed and arranged in the instrument cluster (1) in such a way that all scale lines (8c; 8d) of the at least one scale (5c; 5d) of the at least one indicator instrument (3c; 3d) can be displayed on it.

9. Instrument cluster (1) according to one of the preceding claims, **characterized in that** the operation-related information displayed by the analog indicator instrument (3) comprises a current speed of the motor vehicle, a current engine speed, a current level of a fuel tank, a current voltage of a vehicle battery, a current charge pressure of an engine supercharger, a current engine oil temperature, a current engine oil pressure, a current outside temperature and/or a current cooling water temperature.

10. Instrument cluster (1) according to one of the preceding claims, **characterized in that** the at least one OLED display (10) can be automatically controlled as a function of a user language set via a user menu of the motor vehicle and, depending on the language set, displays different numbers (9) and/or scaling bars (8) or numbers (9) and/or scaling bars (8) at different positions on the at least one OLED display (10).

11. Instrument cluster (1) according to one of the preceding claims, **characterized in that** the at least one OLED display (10) can be automatically controlled as a function of a current position of the motor vehicle determined by means of a global navigation satellite system (GNSS) and, as a function of the current position, displays different numbers (9) and/or scaling bars (8) or numbers (9) and/or scaling bars (8) at different positions on the at least one OLED display (10).

12. Instrument cluster (1) according to one of the preceding claims, **characterized in that** the at least one OLED display (10) can be manually controlled by a user of the motor vehicle and, depending on a current user setting, displays different numbers (9) and/or scaling bars (8) or numbers (9) and/or scaling bars (8) at different positions on the at least one OLED display (10).

13. Instrument cluster (1) according to one of the preceding claims, **characterized in that** the at least one OLED display (10) is designed to display different numbers (9) and/or scaling bars (8) or numbers (9) and/or scaling bars (8) at different positions on the at least one OLED display (10) as a function of one or more of the following parameters:
- the unit of measurement normally used in the country corresponding to a currently set user language,
- the unit of measurement normally used in the country corresponding to a current position of the motor vehicle,
- legal requirements in the country corresponding to a currently set user language,
- legal requirements in the country corresponding to the current position of the motor vehicle, and
- personal preferences of the user with regard to the display on the at least one OLED display (10).

14. Instrument cluster (1) according to one of the preceding claims, **characterized in that** the at least one OLED display (10) is designed to display the numbers (9) and/or scaling bars (8) in different colors.

## Revendications

1. Instrument combiné (1) d'un véhicule automobile, comprenant au moins un instrument à aiguille analogique (3) pour l'affichage d'informations relatives au fonctionnement du véhicule automobile, le ou chaque instrument à aiguille (3) comprenant au moins une aiguille (6) et au moins une échelle (5) associée à l'aiguille ou à chaque aiguille (6) avec des traits de graduation (8) et des chiffres (9),
au moins un instrument à aiguille analogique (3) de l'instrument combiné (1) présentant au moins un écran OLED (10) qui est conçu et disposé dans l'instrument combiné (1) de telle sorte qu'au moins un chiffre (9) de la au moins une échelle (5) du au moins un instrument à aiguille analogique (3) puisse y être représenté,
**caractérisé en ce que**
l'écran OLED (10d) est réalisé en forme d'arc et est disposé dans l'instrument combiné (1) autour d'un axe de rotation (11d) de l'au moins une aiguille (6d) de l'au moins un instrument à aiguille (3d), et
l'au moins un écran OLED (10) est appliqué sur une surface d'affichage (4) de l'au moins un instrument à aiguille (3) disposée dans le champ de vision d'un conducteur du véhicule automobile.

2. Instrument combiné (1) selon la revendication 1, **caractérisé en ce que** la surface d'affichage (4) de l'au moins un instrument à aiguille (3) présente un renfoncement destiné à recevoir l'au moins un écran OLED (10).

3. Instrument combiné (1) selon la revendication 1 ou 2, **caractérisé en ce que** l'au moins un instrument à aiguille (3d) de l'instrument combiné (1) comporte un unique écran OLED (10d) qui est configuré et disposé dans l'instrument combiné (1) de telle sorte que tous les chiffres (9d) de l'au moins une échelle (5d) de l'au moins un instrument à aiguille (3d) peuvent y être représentés.

4. Instrument combiné (1) selon l'une des revendications précédentes, **caractérisé en ce que** l'écran OLED (10d) est en forme d'arc de cercle et est disposé à équidistance autour d'un axe de rotation (11d) de ladite au moins une aiguille (6d) dudit au moins un instrument à aiguille (3d) dans l'instrument combiné (1).

5. Instrument combiné (1) selon l'une quelconque des revendications précédentes, **caractérisé en ce que** les traits de graduation (8) de ladite au moins une échelle (5) dudit au moins un instrument à aiguille (3) sont appliqués de manière fixe sur la surface d'affichage (4) dudit au moins un instrument à aiguille (3).

6. Instrument combiné (1) selon l'une quelconque des revendications précédentes, **caractérisé en ce que** les traits de graduation (8) de ladite au moins une échelle (5) dudit au moins un instrument à aiguille (3) sont appliqués de manière fixe sur la surface d'affichage (4) dudit au moins un instrument à aiguille (3) au moyen d'un procédé de gravure, d'attaque chimique, d'estampage ou d'impression, de manière particulièrement préférée au moyen d'un procédé de marquage au laser par gravure, moussage, ablation ou coloration.

7. Instrument combiné (1) selon l'une des revendications 1 à 5, **caractérisé en ce que** l'au moins un écran OLED (10c' ; 10d') est conçu et disposé dans l'instrument combiné (1) de telle sorte qu'au moins un trait de graduation (8c ; 8d) de l'au moins une échelle (5c ; 5d) de l'au moins un instrument à aiguille (3c ; 3d) puisse y être représenté.

8. Instrument combiné (1) selon la revendication 7, **caractérisé en ce que** l'au moins un instrument à aiguille (3c ; 3d) de l'instrument combiné (1) présente un seul écran OLED (10c' ; 10d') qui est conçu et disposé dans l'instrument combiné (1) de telle sorte que tous les traits de graduation (8c ; 8d) de l'au moins une échelle (5c ; 5d) de l'au moins un instrument à aiguille (3c ; 3d) puissent y être représentés.

9. Instrument combiné (1) selon l'une quelconque des revendications précédentes, **caractérisé en ce que** les informations liées au fonctionnement affichées par l'instrument à aiguille analogique (3) comprennent une vitesse actuelle du véhicule automobile, un régime moteur actuel, un niveau actuel d'un réservoir de carburant, une tension actuelle d'une batterie du véhicule, une pression de suralimentation actuelle d'un moteur, une température d'huile moteur actuelle, une pression d'huile moteur actuelle, une température extérieure actuelle et/ou une température d'eau de refroidissement actuelle.

10. Instrument combiné (1) selon l'une des revendications précédentes, **caractérisé en ce que** l'au moins un écran OLED (10) peut être commandé automatiquement en fonction d'une langue d'utilisateur réglée par l'intermédiaire d'un menu d'utilisateur du véhicule automobile et représente, en fonction de la langue réglée, des chiffres (9) et/ou des traits de graduation (8) différents ou des chiffres (9) et/ou des traits de graduation (8) à différentes positions sur l'au moins un écran OLED (10).

11. Instrument combiné (1) selon l'une des revendications précédentes, **caractérisé en ce que** l'au moins un écran OLED (10) peut être commandé automatiquement en fonction d'une position actuelle du véhicule automobile déterminée au moyen d'un système global de navigation par satellite (GNSS) et représente, en fonction de la position actuelle, des chiffres (9) et/ou des traits de graduation (8) ou des chiffres (9) et/ou des traits de graduation (8) différents à des positions différentes sur l'au moins un écran OLED (10).

12. Instrument combiné (1) selon l'une des revendications précédentes, **caractérisé en ce que** l'au moins un écran OLED (10) peut être commandé manuellement par un utilisateur du véhicule automobile et représente, en fonction d'un réglage actuel de l'utilisateur, des chiffres (9) et/ou des traits de graduation (8) différents ou des chiffres (9) et/ou des traits de graduation (8) à des positions différentes sur l'au moins un écran OLED (10).

13. Instrument combiné (1) selon l'une des revendications précédentes, **caractérisé en ce que** l'au moins un écran OLED (10) est conçu pour représenter différents chiffres (9) et/ou traits de graduation (8) ou chiffres (9) et/ou traits de graduation (8) à différentes positions sur l'au moins un écran OLED (10) en fonction d'un ou plusieurs des paramètres suivants :
- l'unité de mesure habituellement utilisée dans le pays correspondant à une langue d'utilisateur actuellement réglée,
- l'unité de mesure habituellement utilisée dans le pays correspondant à une position actuelle du véhicule,
- les exigences légales prévues dans le pays correspondant à une langue d'utilisateur actuellement définie,
- les exigences légales prévues dans le pays correspondant à la position actuelle du véhicule, et
- les préférences personnelles de l'utilisateur en ce qui concerne l'affichage sur au moins un écran OLED (10).

14. Instrument combiné (1) selon l'une des revendications précédentes, **caractérisé en ce que** l'au moins un écran OLED (10) est conçu pour représenter les chiffres (9) et/ou les traits de graduation (8) dans différentes couleurs.
